# EUROPÄISCHE PATENTSCHRIFT

(11) **EP 0 690 802 B1**
(45) Veröffentlichungstag und Bekanntmachung des Hinweises auf die Patenterteilung: **06.11.1996**
(21) Anmeldenummer: 94902611.6
(22) Anmeldetag: 17.12.1993
(51) Int. Cl.: B61F 5/02, B61F 5/14, B60G 11/28, B60G 11/56

(54) **PENDELSTÜTZE MIT FEDERNDEM STÜTZKÖRPER UND ZUSATZ- UND NOTFEDER**
SWAY BRACE WITH SPRUNG SUPPORT AND SUPPLEMENTARY AND EMERGENCY SPRING
SUPPORT PENDULAIRE MUNI D'UN ELEMENT DE SOUTIEN ELASTIQUE ET RESSORT AUXILIAIRE ET DE SECOURS

(30) Priorität: 30.03.1993 DE 9304837 U
(43) Veröffentlichungstag der Anmeldung: 10.01.1996
(73) Patentinhaber: KNORR-BREMSE AG, 80809 München (DE)
(72) Erfinder: HÖLZL, Stefan, D-81669 München (DE); PHILIPP, Roland, D-12555 Berlin (DE); REICHERT, Peter, D-10245 Berlin (DE); BABNIK, Klaus-Henning, D-10178 Berlin (DE)
(86) Internationale Anmeldenummer: DE9301226
(87) Internationale Veröffentlichungsnummer: WO9422702

(56) Entgegenhaltungen:
- DE-B- 1 083 299
- DE-B- 1 094 786
- FR-A- 1 118 460
- GB-A- 863 743

## Beschreibung

Die Erfindung betrifft eine Pendelstütze an Schienenfahrzeugen.
Pendelstützen werden zur parallelen Verschiebung von Bauteilen an Schienenfahrzeugen verwendet.
Diese Pendelstützen bestehen aus länglichen Körpern, deren Enden gewölbte Flächen oder Kugelflächen besitzen und die sich zumeist auf ebenen Druckflächen abstutzen.
Zur Verhinderung einer seitlichen Verschiebung der Pendelstützen werden Führungen verwendet,deren eine Fläche von einer zykloidischen Kurve und die andere von einem Kreiszylinder gebildet wird.

Es sind Pendelstützen bekannt, bei denen der Stützkörper nicht starr ist, sondern von zwei teleskopartig ineinander verschiebbaren Hülsen gebildet wird, wobei eine Schraubenfeder die Stützkraft von einem Teil der Stütze auf den anderen überträgt.
Beispiele zeigen die DE 810 333 und 833 745.

Die Pendelstützen können so ausgelegt werden, daß Rückstellkräfte auftreten, die den Wagenkasten immer wieder in die Mittellage zurückführen. Die Größe der Rückstellkräfte läßt sich variieren, so daß eine für den Fahrzeuglauf günstige Querschwingfrequenz erreicht werden kann.
Um bei schneller Bogenfahrt einen zu großen Wankwinkel zu vermeiden oder bei Ausfall der Federug Radentlastungen zu verhindern, sind Zusatzfedern erforderlich, die nach einem bestimmten Federweg der Hauptfederung einsetzen und die Gesamtfederung steiler machen bzw. bei Ausfall der Hauptfederung die Abfederung des Wagenkastens allein übernehmen.
Die bekannten Lösungen gemäß dem Oberbegriff des Anspruchs 1 haben den Nachteil, daß die zykloidische Kurve für die eine seitliche Führungsfläche in der Fertigung teuer ist und daß bei federnden Pendelstutzen zusätzliche Führungselemente zur Aufnahme von Querkräften erforderlich sind, die verschleißbehaftet sind und deshalb geschmiert werden müssen, wobei hinzukommt, daß auch die Seitenführungsflächen gewisse Querkräfte aufzunehmen haben, wenn infolge der Teleskopführung die beiden Kalotten nicht mehr denselben Mittelpunkt haben, sobald die Stütze aus der Mittellage schwenk.
Es sind Zusatzfedern bekannt, die in der Hauptfeder, z.B. Luftfeder, oder um die bzw. neben der Hauptfeder angeordnet sind.

Diesen Zusatzfedern haftet der Mangel an, daß sie bei ihrer Wirkung das Querschwingen des Wagenkastens stark behindern und damit die Laufgüte horizontal quer verschlechtern.

Der Erfindung liegt die Aufgabe zugrunde, eine Lösung zu erarbeiten, bei der der für die Herstellung der federnden Pendelstütze erforderliche Aufwand gesenkt wird, die beim Ausschwenken auftretenden Querkräfte und der entsprechende Verschleiß auf ein Minimum begrenzt werden, und bei der die Zusatzfeder auch nach ihrem Einsetzen keinen Einfluß auf das Querschwingen des Wagenkastens ausübt.

Erfindungsgemäß wird die Aufgabe durch die Merkmale des Anspruchs 1 gelöst, indem ein Ende der gefederten Pendelstütze, speziell gestaltet, in einem Auflagekörper mit definierten Führungsflächen angordnet wird, wahrend das andere Ende über ein Axialgelenklager am Kolben eines Hydraulikzylinders befestigt ist, und indem über dem Kolben einer Pendelstütze mit federndem Stützkörper eine Zusatzfeder, zweckmäßigerweise eine Tellerfedersäule, angeordnet ist, gegen die der Kolben nach Durchlaufen eines bestimmten Weges des federnden Stützkörpers anlauft, wodurch sich die vertikale Federkonstante der Wagenkastenabfederung erhöht und ein zu großer Wankwinkel vermieden wird bzw.gegen die der Kolben bei Druckverlust im Zylinder infolge z.B. Leitungsbruches drückt, so daß die Zusatzfeder als Notfeder wirkt, wobei in beiden Fällen die aus der Wagenkastenmasse wirkende Kraft über das Gelenk im Kolben der Pendelstütze in diese eingeleitet wird, wodurch das Querschwingen des Wagenkastens unbeeinflußt bleibt.

Nachfolgend soll die Erfindung an einem Ausführungsbeispiel erläutert werden.
Es zeigt:

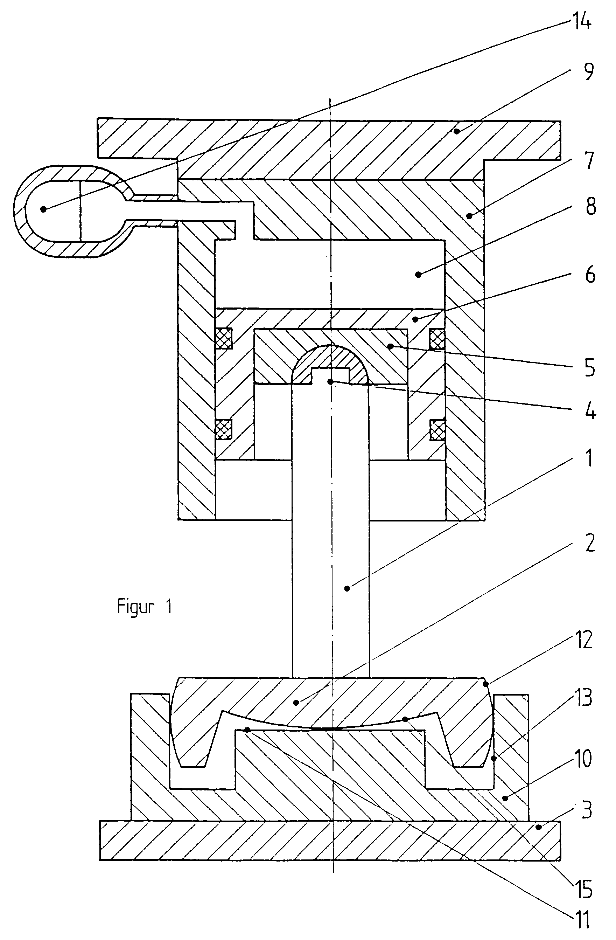

- Figur 1 :: Darstellung der erfindungsgemäßen Lösung

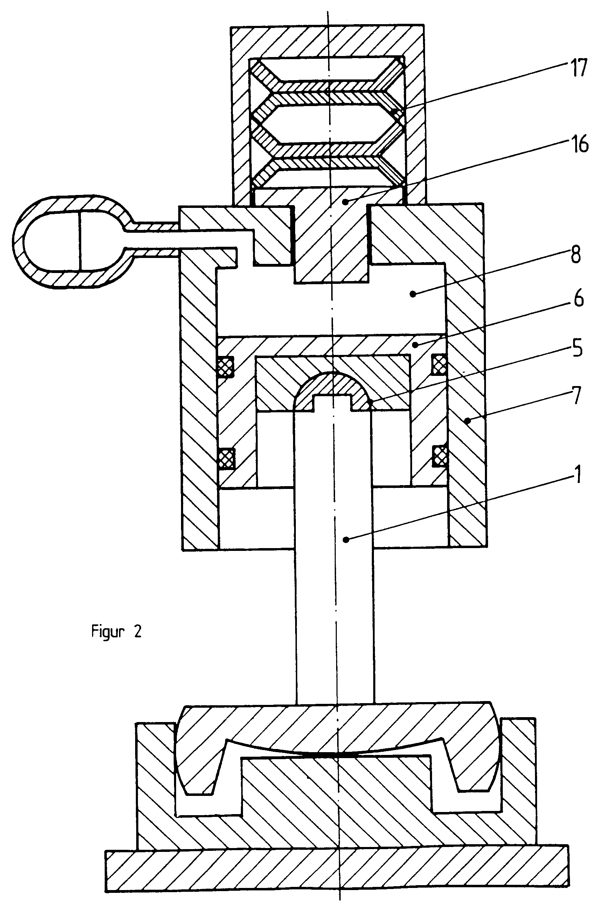

- Figur 2 :: Erfindungsgemäße Lösung mit Zusatz- und Notfeder

### Es ergibt sich folgende Anordnung:

An dem oberen Bauteil 9 des Schienenfahrzeuges ist ein Zylinder 7 befestigt, in dem ein Kolben 6 geführt wird, der einen Kolbenraum 8 bildet, welcher mit einem Druckspeicher 14 in Verbindung steht, und in dem sich unter Druck stehendes Öl befindet.
Am Kolben 6 ist über ein Gelenk 5 das Ende 4 der Stütze 1 der Pendelstütze befestigt.
Das andere Ende 2 der Stütze 1 weist eine Endfläche 15 auf, die sich, kugelförmig gestaltet, auf der Fläche 11 des am unteren Bauteil 3 befestigten Bauteiles 10 abstützt und dessen Mantelfläche 12, die durch Kreissegmente mit unterschiedlichen Radien, deren Einstichpunkte auf der Flache 11 bei der Mittelstellung der Stütze 1 liegen, erzeugt wird, sich also bei den praktisch vorkommenden Ausschwenkwinkeln noch einwandfrei klemmungsfrei abstützen kann.

Alternativ kann auch die Fläche 11 kugelförmig gestaltet werden, während die Endfläche 15 des Endes 2 der Stütze 1 eben gestaltet ist, oder es kann die Gegenfläche 13 am Bauteil 10 eine Rotationsfläche mit zwei oder mehr kreisförmigen Kurven sein, während die Mantelfläche 12 als gerade, kreiszylindrische Fläche ausgebildet ist.
In weiterer Ausgestaltung der Erfindung wird über dem Kolben 6 der Stütze 1 am Zylinder 7 ein in den Kolbenraum 8 des Zylinders 7 ragender Zapfen 16 angordnet, über dem sich eine Tellerfedersäule 17 befindet.

### Es zeigt sich folgende Funktion:

Das im Kolbenraum 8 befindliche Hydrauliköl wirkt in Verbindung mit dem Druckspeicher 14 als elastisches Medium und federt damit das Bauteil 9 , an dem der Zylinder 7 befestigt ist, gegenüber dem Bauteil 3 ab. Die Stützkraft wird dabei über den Kolben 6 in das Gelenk 5 und von diesem in die Stütze 1 und damit in das Bauteil 3 geleitet.
Bei Querbewegungen des Bauteiles 9 schwenkt die Stütze 1 aus und das Ende 2 der Stütze 1 rollt auf der Fläche 11 ab, wobei die Mantelfläche 12 klemmungfrei an der Gegenfläche 13 entlanggleitet und damit eine Querbewegung der Stütze 1 verhindert.
Da der Radius der Endfläche 15, kugelförmig gestaltet, größer ist als der Abstand des Gelenkes 5 von der Fläche 11, ergibt sich bei Querbewegungen des Bauteiles 9 ein rückstellendes Moment, das infolge des konstanten Abstandes des Gelenkes 5 von der Fläche 11 unabhängig vom Federweg des Bauteiles 9 ist.
Die über dem Kolben 6 der Stütze 1 mit federndem Zylinder 7 angeordnete Tellerfedersäule 17, die unten auf einem Zapfen 16 aufsitzt, dessen unteres Ende in den Kolbenraum 8 ragt und gegen das der Kolben nach Durchlaufen eines bestimmten Weges drückt, wobei die Tellerfedersäule 17 zusammengedrückt wird, bewirkt, daß die aus der Wagenkastenmasse herrührende Kraft über das Gelenk 5 im Kolben 6 in die Stütze 2 geleitet wird, die das, durch das Wirken der Tellerfedersäule 17 unbeeinflußte Querschwingen des Wagenkastens ermöglicht.

### Bezugszeichenliste

- 1: = Stütze
- 2: = Ende
- 3: = Bauteil
- 4: = Ende
- 5: = Gelenk
- 6: = Kolben
- 7: = Zylinder
- 8: = Kolbenraum
- 9: = Bauteil
- 10: = Bauteil
- 11: = Ebene
- 12: = Mantelfläche
- 13: = Gegenfläche
- 14: = Druckspeicher
- 15: = Endfläche
- 16: = Zapfen
- 17: = Tellerfedersäule

## Patentansprüche

1. Pendelstütze mit hydraulisch federndem Stützkörper und Zusatz- und Notfeder, zur Anordnung an Schienenfahrzeugen zwischen zwei Bauteilen des Schienenfahrzeuges wobei mindestens einer der Bauteile eine zur Pendelstütze dazugehörige Gegenfläche zur jeweiligen Endfläche des Stützkörpers aufweisen und wobei der Stützkörper aus einem Zylinder (7) mit einem Kolben (6), dessen Kolbenraum (8) mit einem Druckspeicher (14) in Verbindung steht und einer Stütze (1) gebildet wird, **gekennzeichnet dadurch**, daß das untere Ende (2) der Stütze (1) sich auf einer Gegenfläche (11) des Bauteiles (10) abstützt, wobei die Endfläche (15) des unteren Endes (2) der Stütze (1) und/oder die Gegenfläche (11) als Kugelfläche ausgestaltet ist, während das obere Ende (4) der Stütze (1) über ein Gelenk (5) an dem Kolben (6) des Zylinders (7) befestigt ist und daß die Mantefläche (12) des unteren Endes (2) der Stütze (1) oder deren Gegenfläche (13) am Bauteil (10) eine Rotationsfläche mit zwei oder mehr kreisformigen Kurven als Erzeugende ist, während die jeweils andere Mantelfläche (12) oder deren Gegenfläche (13) als gerade, kreiszylindrische Fläche ausgebildet ist.

2. Pendelstutze nach Anspruch 1, gekennzeichnet dadurch, daß die Endfläche (15) des unteren Endes (2) der Stütze (1) als Kugelfläche und die Gegenfläche (11) des Bauteiles (10) eben ausgebildet ist, und daß die Mantelfläche (12) des unteren Endes (2) der Stütze (1) eine Rotationsflüche mit zwei oder mehr kreisförmigen Kurven als Erzeugende ist, während deren Gegenfläche (13) als gerade, kreiszylindrische Fläche ausgebildet ist.

3. Pendelstütze nach Anspruch 1, gekennzeichnet dadurch, daß eine Tellerfedersäule (17) über dem Kolben (6) der Stütze (1) am Zylinder (7) derart angeordnet ist, daß die Tellerfedersäule (17) unten auf einem Zapfen (16) aufsitzt, dessen unteres Ende in den Kolbenraum (8) des Zylinders (7) ragt.

## Claims

1. Sway brace with hydraulically sprung support body and supplementary and emergency spring, for arranging on railway vehicles between two components of the railway vehicle, at least one of the components having a surface of the sway brace opposite the respective end surface of the support body, the support body being made up of a cylinder (7) with a piston (6), whose piston chamber (8) is in connection with a pressure store (14) and forming a brace (1), characterised in that the lower end (2) of the brace (1) supporting itself on an opposite surface (11) of the component (10), the end surface (15) of the lower end (2) of the brace (1) and/or the opposite surface (11) being in the form of a spherical surface, whilst the upper end (4) of the brace (1) is secured by means of a joint (5) on the piston (6) of the cylinder (7) and that the generated surface (12) of the lower end (2) of the brace (1) or its opposite surface (13) on the component (10) is a surface of revolution with two or more circular curves as generatrix, whilst the respective other generated surface (12) or its opposite surface (13) is simply formed as a circular cylindrical surface.

2. Sway brace according to claim 1, characterised in that the end surface (15) of the lower end (2) of the support (1) is formed as a spherical surface and the opposite surface (11) of the component (10) is flat, and that the generated surface (12) of the lower end (2) of the brace (1) is a surface of revolution with two or more circular curves as generatrix, whilst its opposite surface (13) is simply formed as a circular cylindrical surface.

3. Sway brace according to claim 1, characterised in that a cup spring support (17) is arranged on the cylinder (7) above the piston (6) of the brace (1), in such a way that the cup spring support (17) is seated at its underside on a journal (16), whose lower end protrudes into the piston chamber (8) of the cylinder (7).

## Revendications

1. Support pendulaire comportant un corps de support à suspension élastique hydraulique, ainsi qu'un ressort auxiliaire et de secours, et destiné à être disposé dans des véhicules sur rails entre deux pièces du véhicule sur rails, l'une au moins des pièces comportant une surface conjuguée à la surface d'extrémité correspondante du corps de support et faisant partie du support pendulaire, et le corps de support étant formé par un cylindre (7) comprenant un piston (6) dont la chambre de piston (8) est en liaison avec un accumulateur de pression (14), et par un support (1), caractérisé en ce que l'extrémité inférieure (2) du support (1) s'appuie sur une surface conjuguée (11) de la pièce (10), la surface d'extrémité (15) de l'extrémité inférieure (2) du support (1) et/ou la surface conjuguée (11) étant réalisées sous forme de surface sphérique, tandis que l'extrémité supérieure (4) du support (1) est fixée au piston (6) du cylindre (7), par l'intermédiaire d'une articulation (5), et en ce que la surface périphérique (12) de l'extrémité inférieure (2) du support (1) ou bien sa surface conjuguée (13) sur la pièce (10), est une surface de révolution présentant deux courbes circulaires ou plus en tant que génératrices, tandis que l'autre surface périphérique (12) ou, respectivement, l'autre surface conjuguée (13) est réalisée sous forme d'une surface cylindrique circulaire, rectiligne.

2. Support pendulaire selon la revendication 1, caractérisé en ce que la surface d'extrémité (15) de l'extrémité inférieure (2) du support (1) est réalisée sous forme d'une surface sphérique, et la surface conjuguée (11) de la pièce (10) est plane, et en ce que la surface périphérique (12) de l'extrémité inférieure (2) du support (1) est une surface de révolution présentant deux courbes circulaires ou plus en tant que génératrices, tandis que sa surface conjuguée (13) est réalisée sous forme d'une surface cylindrique circulaire, rectiligne.

3. Support pendulaire selon la revendication 1, caractérisé en ce qu'un empilement de rondellesressort (17) est disposé sur le cylindre (7), au-dessus du piston (6) du support (1), de manière telle, que l'empilement de rondelles-ressort (17) s'appuie dans le bas, sur un tenon (16) dont l'extrémité inférieure fait saillie à l'intérieur de la chambre de piston (8) du cylindre (7).
